# EUROPEAN PATENT SPECIFICATION

(11) **EP 0 260 584 B1**
(45) Date of publication and mention of the grant of the patent: **04.08.1993**
(21) Application number: 87113151.2
(22) Date of filing: 09.09.1987
(51) Int. Cl.: G06F 11/16, G06F 11/26

(54) **Fault tolerant computer achitecture**
Fehlertolerante Rechnerarchitektur
Architecture de calculateur tolérant les fautes

(30) Priority: 17.09.1986 IT 2172786
(43) Date of publication of application: 23.03.1988
(73) Proprietor: BULL HN INFORMATION SYSTEMS ITALIA S.p.A., 10014 Caluso (Torino) (IT)
(72) Inventor: Tiziano, Maccianti, I-20010 Pregnana Milanese (IT); Luciano, Raimondi, I-20149 Milano (IT)
(74) Representative: Falcetti, Carlo

(56) References cited:
- FR-A- 2 074 209
- US-A- 3 678 467
- US-A- 4 412 282
- 1982 CONFERENCE PROCEEDINGS OF THE FIRST ANNUAL PHOENIX CONFERENCE ON COMPUTERS AND COMMUNICATIONS, 9th-12th May 1982, pages 323-326, Phoenix, US; J.R. HOLDEN: "Common control design using matched microprocessors for failure detection"

## Description

The present invention relates to a fault tolerant computer architecture.

It is know that, thanks to the advent of integrated circuit technologies and the consequent cost and size reduction of the electronic components, fault tolerant computers have been proposed and put, in the market.

The concept of fault tolerance, as used with reference to computers, is very broad and includes all the expedients which make possible the correct operation of a computer even in presence of a failure, or at least the immediate detection of a failure, in order to avoid a wrong data handling and the propagation and spreading of errors in the set of handled data.

In other words it is essential that failures do not result in data errors.

Several computer architectures are used to achieve this result: the spread is from majoritary logic architectures to simple logic redundancy architectures.

In the majoritary logic architectures the various processing functions are performed jointly in parallel by three or more functional units, with a comparison of the input and output data so that, in case of discrepancy among the input data or the output data, valid data are recognized as those which coincide in input or output to two functional unit, and those data which differ from the majority are discorded as wrong data.

It is clear that this kind of systems may operate without causing data errors even if a failure is present in one functional unit, until the occurrence of a further failure affecting a functional unit in a data flow parallel to the one of the already faulty unit.

During this time interval it is possible to assure a continued service of the equipment even if the faulty unit is temporarily removed from the system for purpose of replacement of repairing.

In simple logic redundancy architectures this objective is relinquished and it is only assured, through suitable redundancies, that a failure is immediately detected, so as to stop the running logical processes without affecting the data correctness and integrity.

Thereafter, by suitable diagnostic procedures the defective unit may be identified, excluded from the system, replaced with a spare unit if available, or repaired.

In the most elementary form of redundancy architecture the computer may be provided with parity bit generators and checkers in those nodes or units where information loss is more likely to occur, for instance in the working memories.

In the most sopysticated redundancy architectures all the functional units or their most are duplicated and simultaneously operated in parallel.

Comparators, suitably located, compare the data pair in input to, or output from each pair of functional units and, on the occurrence of a discrepancy provide a fault signal and cause a system halting.

From the CONFERENCE PROCEDINGS OF THE FIRST ANNUAL PHOENIX CONFERENCE ON COMPUTERS AND COMMUNICATIONS, 9th - 12th May 1982, pages 323 - 326, Phoenix, US a fault tolerant computer architecture according to the precharacterising part of claim 1 is known.

The problem in such architectures is the checking of the comparators functionality.

The most common approach is to duplicate the comparators too, with a further constructive complication an other disadvantages (such as increases in driven loads and failure probability) which is not worth to comment in detail.

Another approach is to cause, under test conditions, an alteration in one of the data in input to the several comparators so as to check if they effectively provide an error indication.

This may be obtained by providing, upstream of one input set of each comparator, a set of EX OR gates.

Such gates, depending on the logic level present at one "control" input, transfer in output the logic level present at the other input in direct or inverted form. Therefore they allow to alter at will the data in input to the comparators so as to check the effective generation of an error signal.

Even in this case, however, a further constructive complication results, an increase in the failure probability and an increase in costs.

It would be possible, in order to simplify the structure, to use a single set of EX ORs, located in the information flow so as to simulate a data error with effects which propagate in cascade in a line of functional units and not it the other one, therefore with consequences affecting the operation of the functional units located downstream and detectable by the comparators located downstream.

This approach reduces but does not overcome the mentioned disadvantages. In addition it has the disadvantage of introducing propagation delays in the logic flow, delays which are generally unacceptable.

These inconvenients and limitations are overcome by the fault tolerant computer architecture of the present invention as claimed in claim 1 where the test of the several comparators and of the correct performance of the functional units is obtained by stimulating the functional units in parallel each other with different instructions, so that, under test conditions, the functional units, normally operating in the same way, are compelled to work in different way and produces different information sets in input and output which sets must necessarily cause the comparators to produce an error indication.

This operative mode is obtained by using a read only control memory (ROM), already provided and needed for the loading of a read-write control store (RAM) with a bootstrapping process, jointly with the use of the read-write control store, so that a first set of functional units operates under control of the ROM and a second set of functional units operates under control of the RAM.

In this way the test operation may be performed without need of EX OR gates inserted in the data flow path upstream of the comparators and the already mentioned disadvantages are avoided.

Further, as it will appear more clearly in the following, only few additional logic components are required.

A further aspect to consider, which has been mentioned, relates to the need of avoiding error propagation from one functional unit to another, for instance from a processor to a memory in a multiprocessor system where several processors share a common working memory.

In this case it is advisable that the failure detection in one processor causes the immediate halting and the setting out of service of the faulty processor, but not the halting of the other processors and the common working memory.

However it must be assured that if the fault occurs during a read/write operation of the working memory, the memory is not affected by a wrong operation.

Even this requirement is met by the fault tolerant system architecture which is the object of the present invention.

Finally it is known that the operation speed of several integrated circuits is adversely affected by the load connected to their outputs which loads causes a degradation of the signal edges and therefore a delay and a spread of the logical switching.

The fault tolerant architecture of the invention exploits the functional redundancies to achieve a load distribution over several equivalent functional units so as to overcome this limitation.

These and other features and the resulting advantages will appear more clearly from the following description of a preferred embodiment and from the drawings where:
- Figure 1 shows in block diagram a multiprocessor system with the fault tolerant architecture of the invention.
- Figure 2 and 3 joinly show in detailed circuit diagram the architecture of a processor in the system of Fig. 1
- Figure 4 shows in timing diagram the basic operation cycle of a microprocessor used in the architecture of Figures 2 and 3.
- Figure 5 shows in timing diagram the operation of some components of the processor of Figures 2 and 3.

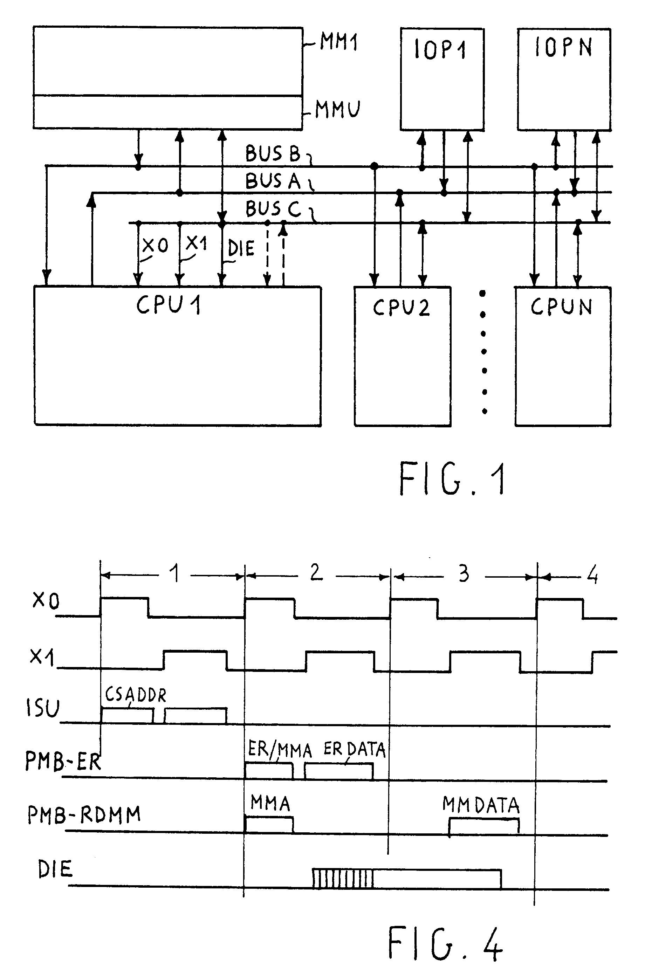

Figure 1 shows in block diagram a multiprocessor system with the fault tolerant architecture of the invention.

The system comprises a plurality of central processing units CPU1, CPU2, CPUN, a plurality of control processors IOP1,...IOPN for input/output devices such as disk units, tape units, communication units, printers, and a common working memory MM1, having its own control unit MMU.

The central processing units CPU1...CPUN, the I/O processors IOP1...IOPN and the working memory MM1 (through its control unit MMU) are connected each other through a system bus comprising essentially three sections:
- A unidirectional bus BUSA for transferring data, addresses, commands, having 32 leads plus 4 leads for the transfer of parity control bits, from any one of the CPU processors or I/O processors to memory MM1,
- A unidirectional bus BUS B for transferring data read out from memory MM1 to any one of the CPU processors or I/O processors. BUS B comprises 32 leads plus 4 leads for the transfer of parity control bits.
- A bus BUS C comprising a suitable number of leads, for transferring timing and control signals, in particular two timing signals X0,X1, generated by MMU, having fixed frequency and used by the several processors to work in synchronism with the memory, and a DIE signal issued by MMU for signalling to the processors that BUS B is to be loaded with information read out from memory.

Other signals, used for conflict resolution in the access to the bus, and for indicating the destination of information read out from memory, are beyond the scope of the invention and unessential for understanding it.

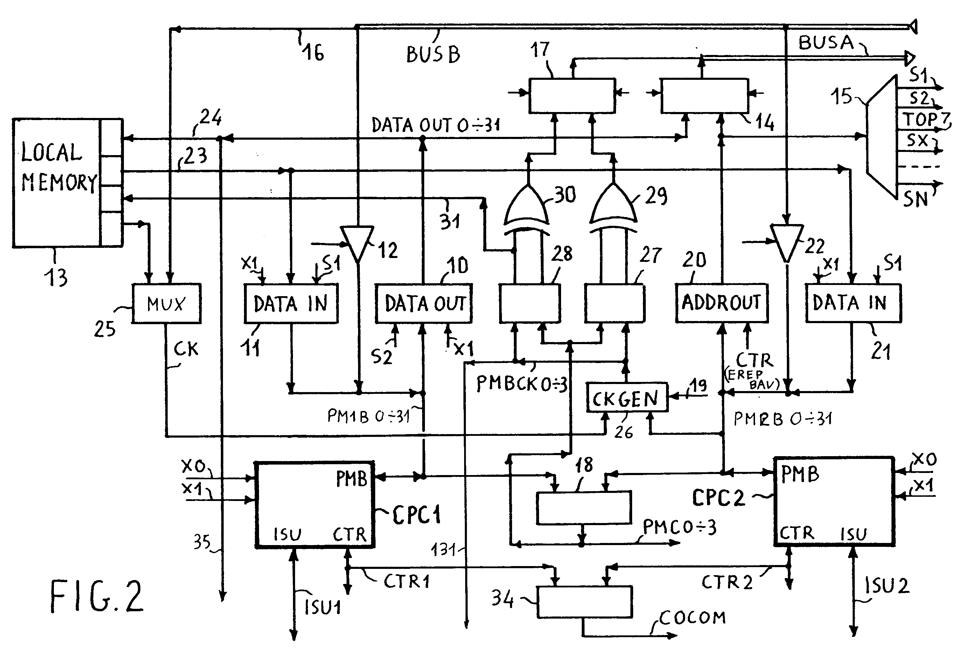

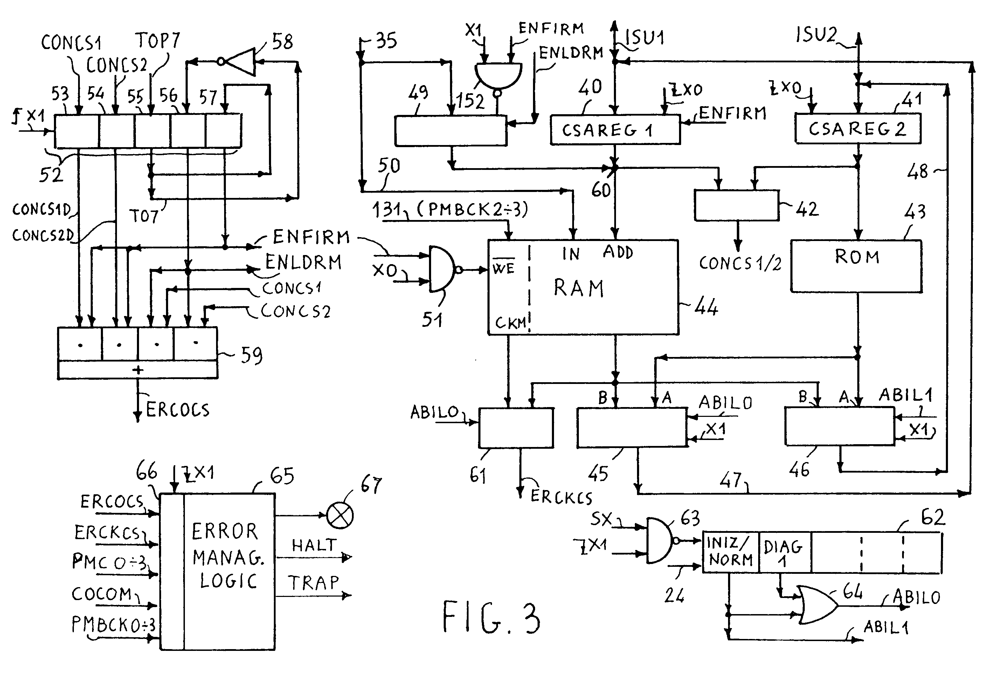

Figures 2 and 3 jointly show a central processing unit, such as CPU 1, embodied according to the fault tolerant architecture of the invention.

The core of the central processing unit consist in an integrated microprocessor CPC 1, preferably the microprocessor NCR/32 manufactured and distributed by the firm NCR.

The microprocessor has a 32 bit parallelism and performs all the functions normally requested to a computer.

A detailed description of the interval structure of the microprocessor, its operation and the set of performed instructions is contained in the manual "NCR/32 General Information" published on 1984 by N.C.R. Corporation, Dayton, Ohio, USA.

For the purposes of the invention it suffices to indicate that the microprocessor is provided with a bidirectional input/output port PMB having 32 terminals, with two timing inputs for receiving two non overlapped timing signals X0, X1 having the same frequency, with a bidirectional input/output port ISU having 16 terminals and a multiple terminals port CTR for receiving or outputting control signals.

The NCR/32 microprocessor is microprogrammed and executes microprograms residing in a control store.

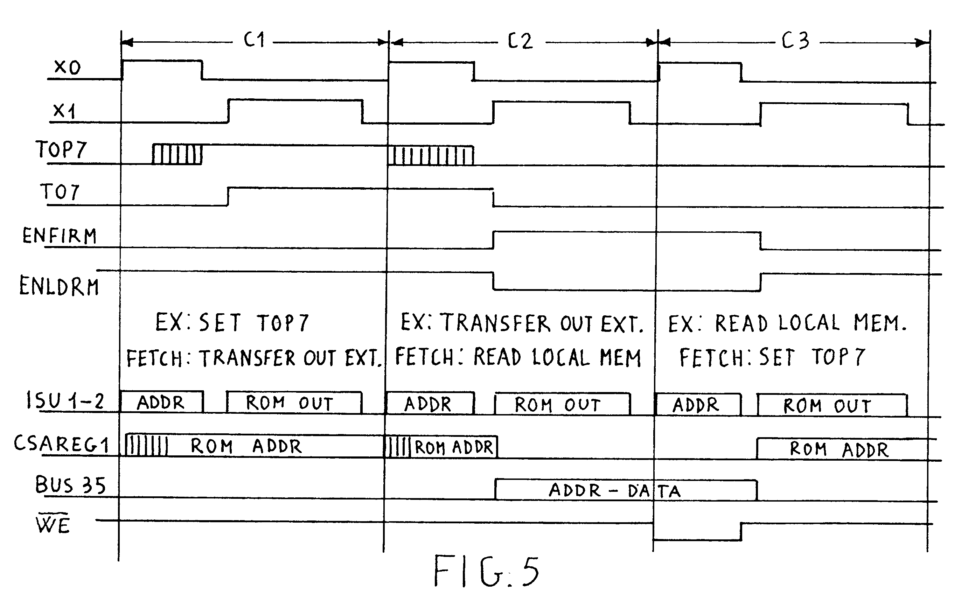

Its operation may be easily understood with reference to the timing diagram of fig. 4 which shows the level of timing signal X0, X1 during time and the corresponding state of ports ISU and PMB.

The raising edge of signal XO defines the beginning/end of a machine or microprocessor cycle (cycles 1,2,3,4).

During the time interval in which X0 is high or at logic level 1, port ISU is enabled to output from microprocessor a control store address CSADDR.

This address is used by a control store to reference a microinstruction which can be put on port ISU when X0 is at logic level 0.

During the same machine cycle, (cycle 1) when signal X1 is at logic level 1 port ISU is enabled in input and the microinstruction present at port ISU may be transferred inside the microprocessor and latched with the falling edge of X1.

This microinstruction, already present at the beginning of the next subsequent cycle (cycle 2),controls the operation of the microprocessor in the course of such cycle.

If the controlled operations requires an information transfer, in input to or output from microprocessor, the state of port PMB is controlled as follows.

In case of a transfer from or to an external register connected to PMB, in the time interval in which X0=1, port PMB is controlled in output and provides a selection and control code, generically a register address (ER,MMA) and subsequently, in the time interval in which X1=1 it is controlled in input or output to receive from or transfer to the selected register a 32 bit data code (ER DATA).

This occurs in the same machine cycle (cycle 2 diagram PMB-ER).

In case the controlled operation a memory write the state of port PMB does not differs from the one of the preceding case.

On the contrary, if the requested operation is a memory read (diagram PMB-RDMM), this is performed in more machine cycles.

In the course of a first cycle (cycle 2) when X0=1 a memory address MMA is outputted on port PMB and the microprocessor is set in wait state, waiting for an available data signal (DIE) which is received, through one of the BUSC leads to one of CTR port inputs.

If such signal is available in the course of an interval X1=1, in the course of the subsequent interval in which X1=1 the read out data is available at PMB and is loaded in the microprocessor (MM DATA).

Therefore two machine cycles are required, as a minimum, to perform a memory read operation.

Clearly the microprocessor does not wait for completion of the running operation in order to read out from the control store the next microinstruction. Instead there is an overlap between execution of one operation and fetching of the subsequent microinstruction from the control store.

Turning again to Fig. 2 it may be seen that microprocessor CPC 1 is duplicated, that is CPU 1 is provided with a second microprocessor CPC 2 identical to CPC 1.

Port PMB of the two microprocessors is respectively connected to channels PM1B0:31 and PM2B0:31.

ISU port is respectively connected to channels ISU1 and ISU2.

Channel PM1B0:31 is connected to the inputs of a DATA OUT register 10 to the outputs of a DATA IN register 11 and to the outputs of a set 12 of Tristate drivers.

Likewise, channel PM2B0:31 is connected to the inputs of a register ADDROUT 20, to the outpus of a DATA IN register 21 and to the outputs of a set 22 of tristate drivers.

A LOCAL MEMORY 13, having capacity 256 × 36 bits, constitutes a bank of external registers which may be used by microprocessor CPC 1 as well as its "duplication" CPC 2.

To this purpose the inputs of the two registers 11 and 21 are connected to a channel 23 (having 32 bits) for outputting data from memory 13.

The registers 11, 21 may transfer to buses PM1B and PM2B an information read out from local memory 13.

Likewise the outputs of register 10 are connected to a channel 24 (DATA OUT 0:31), which connect them in input to local memory 13, and to a first input set of a multiplexer 14.

The outputs of register 20 are connected to a second input set of multiplexer 14, as well as to the inputs of an address/command decoder 15, which generates a set of selection signals S1,S2,TOP 7, SX....SN.

The outputs of multiplexer 14 are connected to the 32 "data/address" leads of the system bus BUS A, and the inputs of the two tristate driver sets 12, 22 are connected to the 32 "data"leads of system bus BUS B.

The four "parity bit" leads of BUS B (channel 16) are connected to an input set of a multiplexer 25.

A second input set of multiplexer 25 receives the parity bits in output from local memory 13.

Multiplexer 25 selectively transfers to output channel CK the signals received at one of the input sets.

Channel PM2B0:31 is connected to 32 inputs of a parity bit generator/checker CK GEN 26.

Other four inputs of CK GEN 16 are connected to channel CK.

When generator 26 works as a parity generator, it provides in output for each input byte, an output parity bit.

When generator 26 works as a parity checker, the four internally generated parity bit are compared with the four parity bit received from channel CK and four signals of parity error (PMBCK 0:3) are produced in output in case the compared bit are unequal.

The operation of generator 26 is defined by a timed control signal received at a control input 19.

The outputs of generator 26 are connected to four inputs of a register 27 and a register 28.

The corresponding outputs of register 28 are connected, through a four leads channel 31 to corresponding parity bit inputs of local memory 13.

Further, the corresponding outputs of register 28 and 27 are ronnected to a first input set of two EX OR sets 29, 30.

Before completing description of registers 27 and 28 it is usefull to reconsider microprocessors CPC 1, CPC 2 and their transfer bus PM1B and PM2B.

The two busses PM1B0:31 PM2B0:31 are respectively connected to the first and the second input set of a comparator 18.

Comparator 18 provides in output on a four leads channel PMC0:3 a comparison code.

The function of comparator 18 is to compare in continuous mode, byte by byte, the information present on busses PM1B and PM2B and to provide in output and for each compared byte pair a signal at logic level 0 if the compared bytes coincide or at logic level 1 if they are different. Therefote a logic level appears on one or more of the PMC0:3 outputs, in case of error.

The outputs PMC O:3 are connected, through channel 33 to corresponding inputs of registers 27, 28 and the corresponding output of registers 27, 28 are connected to corresponding inputs of a second input set of EX OR 29, 30.

The outputs of EX OR 29, 30 are respectively connected to a first and a second input set of a multiplexer 17, whose outputs are connected to the four "parity bit" leads of channel BUS A.

Control ports CTR of microprocessors CPC1, CPC2 are respectively connected by channels CTR1, CTR2 to corresponding inputs of a comparator 34, which provides in output, on lead C0COM, an error signal at logic level 1 if the control signal present on channels CTR1 and CTR2 differs from each other.

Registers 10, 11, 21 are "transparent latch" registers timed by signal X1 and enabled by a selection signal in output from decoder 15.

Likewise the "tristate drivers" 12 and 22 are enabled by a selection signal in output from decoder 15 and timed by X1 signal raising in the cycle following the one in which microprocessors CPC 1, CPC 2 have received signal DIE=1.

Multiplexer 14 and 17 are timed by control and selection signals generated by the memory control unit MMU which further controls the access to the system bus.

Register 27, 28 are "transparent latch" registers timed by signal X0 and X1 respectively and with a suitable delay. Register 20 is timed by control signal (EREP, BAV in the set CTR) synchronous with X0.

Some comments, related to Fig. 2 follows:
The described architecture, in order to provide fault tolerance, follows two basic criteria.

The elements which perform a data storage and channelling function are controlled by means of parity bits.

The elements which perform functions other than the previous two, (boolean operations, arithmetic operations, conversion operations) are controlled by "duplication" of the function and control (comparison) of the information in input and output.

Thus data in input through BUS B and drivers 22 are controlled by parity generator 26 which regenerates parity bits and compares them with the original parity bits, present on BUS B and received through multiplexer 25.

A further check is performed by comparator 18 which compares the data present on channels PM1B and PM2B thus assuring that the two drivers sets 12 and 22 perform in the same way and do not introduce any error.

If a discrepancy is detected between signals in output from comparator 18 and parity generator 26, there must be some wrong functioning of multiplexer 25 or generator 26 or comparator 18.

The same criteria is followed for data stored in the local memory 13 together with their respective parity bit.

These data are transferred on channel PM2B, via channel 23 and DATA IN register 21. The parity bit are regenerated by generator 26 and compared with parity bit read out from local memory and received through multiplexer 25, thus checking the integrity of information in output from local memory 13 and present on bus PB2B.

A further control is performed by comparator 18 which tests the correct behaviour of input registers 11 and 21.

As to the information in output, the procedure which assures the information integrity is substantially the same.

Integrity at the source is assured by comparator 18 which tests for equality in contents of channels PM1B and PM2B.

Addresses are transferred outside through register 20 and generator 22 provides the corresponding parity bits, which are loaded in register 27, together with information in output form comparator 18.

If the information as originated is error exempt (same information on both PM1B and PM2B) the EX OR 29 transfer the parity bit on BUS A through multiplexer 17, without modification.

If the information as originated is defective (PM1B ≠ PM2B and therefore PLC0:3 ≠ 0) the EX OR 29 modify the parity bit and the information present on BUS 1 results affected by parity error and may be ignored by the receiving unit. Error propagation is therefore prevented, which is very important.

In fact, it must be beared in mind that an error indication in output from comparator 18 (as well as from other comparators) is loaded in an error register at the end of a machine cycle, indicatively when signal X1 drops to 0.

This is required to avoid the recognition of spurious and transient signalling.

It is at that time only that the computer takes in due account the error occurrence and provides, if required to halt the operation and to rise an error signal.

Missing an error signal, prior to such moment, the operations already started in the course of the machine cycle, such as a memory write at a wrong memory address, may have severe and unrecoverable consequences (the loss of information already contained in the wrongly addressed memory location).

The same integrity criterion is followed for the data in output:
Data in output are transferred from PM1B through register 10 and from there can be sent to local memory 13, through bus 24 or to BUS A, through multiplexer 14.

Comparator 18 assures the data integrity at the source by comparison of the contents of PM1B and PM2B.

Generator 26 provides the parity bits, which through register 28, EX OR 30 and multiplexer 17 are loaded on BUS A unchanged or modified depending on the comparison result at comparator 18.

In local memory 13, the parity bit are anyway loaded in unchanged form because, there is no need to invalidate the wrong data.

Therefore the set of comparator 18, of generator 26 and the EX OR 29, 30 provides for an effective and immediate protection against error propagation outside the CPU.

Another aspect which is worth of specific mention is that, contrarily to the redundancy systems of the prior art, in which a processor such as CPC 1, is operative, at any effect, as a functional unit, and its replica CPC2 is operative as merely a duplicate for test purposes and the information transfer outside the CPU is performed by a single processor such as CPC 1, in the architecture shown in Fig. 2 both processor CPC 1 and CPC 2 share the various tasks.

In particular CPC 1 transfers data in output through register 10, whilst CPC 2 transfer addresses in output through register 20.

Therefore by partitioning the output load on both processor, the output load of each of the two processors is reduced and the performances enhanced.

Figure 3 shows further elements of central unit CPU 1.

Channels ISU1 and ISU2 (connected to the ISU ports of processors CPC1, CPC2) are connected to the inputs of register 40 (CSAREG 1) and 41 (CSAREG 2) respectively.

These registers are for the purpose of storing a control memory address.

They are periodically loaded with the falling edge of X0 signal, which is received at a clock input.

The outputs of register 41 are always enabled.

The output of register 40 are enabled by a signal ENFIRM at logic level 0 applied to a control input.

The outputs of register 41 are connected to a first input set of a comparator 42 and to the address inputs of a read only memory (ROM) 43 having capacity of 4K words, each 16 bit long.

The outputs of register 40 are connected to the second input set of comparator 42 and to the address inputs ADD of a read/write memory RAM 44, having capacity of 64 K words, each 18 bits long.

Comparator 42 compares the 16 bit addresses in output from registers 40, 41 respectively, byte by byte, and provides in output two signals CONC S 1/2 having level 0 in case the addresses coincide.

In case of unequality one or both output signals rise to logic level 1.

The 16 data outputs of ROM 43 are connected to a first input set A of two multiplexer 45, 46.

Sixteen of the 18 data outputs of RAM 44 are connected to a second input set B of the two multiplexer 45, 46.

The outputs of multiplexer 45, 46 are respectively connected, through channels 47, 48, to channels ISU1 and ISU 2.

Multiplexer 45, 46 are respectively controlled by a selection signal ABIL 0, ABIL 1.

When ABIL 0=0 input set A of multiplexer 45 is selected.

When ABIL 0=1 input set B is selected.

Likewise, when ABIL1 = 0 input set A of multiplexer 46 is selected and when ABIL 1=1 input set B is selected.

The outputs of both multiplexer 45, 46 are controlled by signal X1.

When X1=1 the outputs are enabled to transfer information on channels 47, 48 respectively, otherwise they are held in high impedance state.

The operation of control stores RAM 44 and ROM 43 is the following. In initialization mode, when the system is put in service, the two microprocessors CPC 1 and CPC 2 (fig. 2) force on channels ISU1 and ISU 2 a preestablished control store address, for istance "all zeroes" for starting the initialization process.

This occurs in phase X0=1.

By X0 dropping to 0 the address is loaded in the two registers 40,41, compared by comparator 42 and inputted to RAM 44 and ROM 43.

Reading of RAM 44 does not produce any useful result at the output, because RAM 44 is empty.

Reading of ROM 43 produces in output a microinstruction code which is present at the A input of both multiplexer 45, 46.

In the initialization mode, the two signals ABIL0, ABIL1 are both at logic level 0.

Therefore in the phase X1=1 which immediately follows, the microinstruction is transferred on channels ISU1 and ISU2, is received by both microprocessors CPC1, CPC2 and controls their operation during the following cycle.

In initialization mode, a microprogram residing in ROM 43 causes the loading of RAM 44 with the procedure which will be considered in the following.

Once RAM 44 is loaded, it is possible to change from initialization mode to normal operation mode.

In the operative mode, all operation are controlled by microprograms which reside in RAM 44.

In order to switch from initialization mode to normal mode it suffices to change the control signals of the two mutliplexors from level 0 to level 1 (ABIL0=1, ABIL1=1).

Under these conditions, the addresses present in registers 40, 41 are again compared by comparator 42, refer again to the two control stores 44, 43, but the information in output from ROM 43, which is generally meaningless, is ignored and its the information read out from RAM 44 which is transferred on channels ISU1, ISU2.

In order to load RAM44 a 16 bit register 49 is provided. Inputs of register 49 are connected to 16 of the 32 leads of internal data channel 35.

The remaining 16 leads of channel 35 are connected to 16 data inputs of RAM 44 through channel 50.

Two remaining data inputs of RAM 44 (which has an 18 bit parallelism) are connected to two leads of channel 31 (Fig. 2) and receive parity bitsPMBCK 2:3 related to the information present on channel 50.

RAM 44 is controlled for write operation by a signal at logic level 0 present at a control input W̅E̅.

Such signal is obtained as output from a NAND gate 51 which receives in input timing signal X0 and the already mentioned ENFIRM signal.

The loading of register 49 is controlled by a signal obtained as output from AND gate 52 which receives as inputs signal X1 and signal ENFIRM.

Register 49 outputs are connected to the address inputs ADD of RAM 44 (and therefore to the output of register 40 (CSAREEG1).

It is clear that, in order to avoid unacceptable interference, the outputs of registers 49 and 40 must be enabled in mutually exclusive way.

In fact outputs of register 49 are enabled by a control signal ENLDRM at logic level 0 and such signal is logically the inverted form of ENFIRM.

In order to produce signals ENFIRM, ENLDRM a register 52 is provided, which is periodically loaded on the occurrence of the raising edge of signal X1.

Cells 53,54 of register 52 receive as input signals CONCS1 and CONCS2 in output from comparator 42.

Cell 55 receives as input a signal TOP 7 in output from decoder 15 (Fig. 2).

Cell 56 receives as input the signal in output from cell 55, previous inversion performed by NOT 58.

Cell 57 receives as input the signal in output from cell 55.

Signal in output from cell 56 and 57 is respectively signal ENLDRM and signal ENFIRM.

For the reasons that will appear more clearly in the following, signals ENFIRM and ENLDRM control in addition to registers 40, 49 and RAM 44, also the flow of signals CONCS1, CONCS2.

To this purpose four input section AND OR GATE 59 has the inputs of each section connected to receive the signal pair CONCS1D-ENFIRM, CONCS2D-ENFIRM, CONCS1-ENLDRM, CONCS2-ENLDRM.

CONCS1D and CONCS2D are the signals in output from cells 53, 54 respectively.

Gate 59 provides in output control store error signal ERCOCS, having logic level 1 on the occurrence of an error.

For a better understanding of the way in which RAM 44 is loaded and the way in which control store error signals are in turn controlled it is useful to refer to timing diagram of fig. 5.

Diagrams X0, X1, show the timing signals which define subsequent machine cycles C1, C2, C3.

It is assumed that prior to these cycles the computer, by using ROM 43 resident microprograms has loaded the local memory 13 with information pairs (address - microinstruction) useful for the loading of RAM 44.

The source of such information may be a working memory of the system, loaded in turn by a disk memory.

However, during initialization, it is preferable, for diagnostic purpose, not to resort to external units and it is possible to use as data a set of information contained in a field of ROM memory 14.

This set is read out, and loaded in the local memory 13 to be recalled one 32 bit information at a time, in an internal microprocessor register.

Diagram 5 shows the case in which the microprocessors CPC1, CPC2 have already loaded in an internal register, the information to the written into ROM 44 and the related address.

During cycle C1, the microprocessors execute a microinstruction for the loading of register 52 (EX : SET TOP 7) and at the same time the next miscroinstructions is fetched (FETCH:TRANSFER OUT EXIT).

Diagram TOP 7 shows that within phase X0=1 the selection signal TOP 7 generated by decoder 15 rises to logical level 1.

By the raising edge of X1 cell 55 of register 52 is set and signal T07 is produced in output (diagram T07).

It is clear that being previously TO7 at logic level 0, signals ENFIRM and ENLDRM in output from cells 57, 56 respectively, were and remain at logic level 0 and 1 respectively (Diagrams ENFIRM, ENLDRM).

The state of cells 53 and 54 depends on the error conditions. During cycle C1 the next microinstruction is fetched.

Therefore in phase X0=1 channels ISU1, ISU2 contains a control memory address (Diagram ISU1-2).

Diagram CSAREG1 shows the information in output from register 40.

Being ENFIRM=0 such information is for the whole duration of cycle C1 the ROM address (ROM ADDR) loaded in register 40.

A possible address discrepancy detected by comparator 42 before the raising to 1 of X1, causes the set of either one or both cells 53, 54.

Signal CONCS2D, CONS1D appearing at the output of such cells does not, generate an error signal in output from gate 59 because signal ENFIRM=0 masks the possible presence of such signals.

However a possible address discrepancy is anyway detected by gate 59 because signals CONCS1 and CONS2 are enabled by ENLDRM=0 to generate signal ERC0CS.

By phase X1=1 the microinstruction read out from ROM43 (ROMOUT, diagram ISU1-2) is transferred on channels ISU1 and ISU2 and establishes the operation to be performed in cycle C2.

During cycle C2 the next following microinstruction is fetched by putting an address on channels ISU1, ISU2 in phase X0=1 and the read out microcinstruction in phase X1=1.

The address is latched in register 40 for the whole duration of cycle C2.

However, since the new microninstruction which is executed does not control the loading of register 52, signal TOP7 drops to 0 and by the raising edge of X1 cell 55 is reset and T07 drops to 0.

At the same time cell 56 is set and cell 57 is reset so that signals ENFIRM and ENLDRM toggle to 1 and 0 respectively.

The outputs of register 40 are disabled and the information present at node 60 ceases to be meaningfull as a ROM address.

The possible address error indication following to a discrepancy previously detected between the information in output from register 40 and the information in output from register 41 is however not lost.

In fact, by X1=1 it is stored in cells 53,54 whose signals CONCSD1, CONCSD2 are now enabled by ENFIRM=1. Therefore the possible resulting error signal ERCOCS may be loaded, at the end of phase X1=1 in an error latching register.

By reverse it must be noted that from the beginning of phase X1=1, owing to ENLDRM=0, the possible error signals in output from comparator 42 (CONCS1, CONCS2) becomes uneffective to produce an error signal consistent with the fact that the discrepancy between input signals becomes meaningless as to a possible error.

Beginning with phase X1=1, microprocessor CPC1 puts on bus PM1B a 32 bit information, 16 bits expressing a RAM 44 address where to write the remaining 16 bits.

The information is transferred, through DATA OUT register 10 on channel 24. From channel 24, via channel 35 it is inputted partially to register 49 and partially to the data inputs IN of memory 44 (Diagram BUS 35, ADDR-DATA).

The "address" portion is loaded in register 49 with a load signal which is the logical NAND (performed by NAND gate 152) of signals X1 and ENFIRM.

It is transferred to node 60 owing to enabling signal ENLDRM=0, which enables the register outputs from the raising to one of X1 to the next raising to 1 of X1 within cycle C3.

The "data" portion is present on channel 50 during the same interval.

As already told, the error signals at the output of comparator 42, during such time interval are masked.

With the beginning of cycle C3, the fetching of the next following microinstruction from ROM 43 begins.

This microinstruction may control, by way of example, a new setting of cell 55 (SET.TOP 7).

Meanwhile the preceding microinstruction is executed, which may consist in a local memory 13 read (EX: READ LOCAL MEM) to load an internal microprocessor register with a new information to be written into RAM 44, together with its related address.

Independently of such operation, owing to ENFIRM=1, when X0=1 a signal at logic level 0 is provided to the WE input of RAM memory 44, which is therefore controlled in writing (Diagram WE).

In the course of cycle C3, there is still the possibility of testing the correctness of the addresses present on channels ISU1, ISU2.

In fact, during phase X0, the discrepancy between information in input to comparator 42 is duly masked at the input of gate 59 (ENLDRM=0) because it is meaningless in terms of error/failure.

In addition, the error indication which is stored in cells 53,54 with the beginning of phase X1=1 is masked too, beginning the same instant, in that ENFIRM signal drops to 0, due to the reset of cell 57. On the contrary at the beginning of phase X1=1 the address previously loaded in CSAREG-1 register 40 is made available at node 60 and may be compared with address loaded in register 41.

The possible error signal CONCS1, CONCS2 at the output of comparator 42 is enabled to generate error signal ERCOCS=1, at the output of gate 59 because signal ENLDRM rises to 1 again.

In this way the loading of RAM memory 44 is performed without any exception to the continuous monitoring by comparison of the running operations.

It is clear, that during the RAM memory 44 loading, which occurs in the initialization phase, signals ABIL0 and ABIL1, which control multiplexer 45, 46 are both at logic level 0.

In order to assure the correctness of the data which will be read out from RAM memory 44, it is provided with cells for storing parity bits, which are loaded through channel 31.

The memory check outputs CKM, corresponding to such cells, are connected to the inputs of a parity control network 61, which receives on other inputs the data in output from RAM44.

In case of parity error the network outputs a parity error signals ERCKCS at logic level 1.

Clearly the network is enabled only in the normal operating mode, by signal ABIL0=1, when microinstructions are effectively read out from RAM 44.

The above description clearly shows the essential role which is played by comparators 18,34 and 42 in the identification of the operation correctness of the computer.

However, in order to be certain that in case of discrepancy between the behaviour of microprocessor CPC1 and CPC2, this is effectively detected and signalled, it is needed to test that detection and signalling effectively occurs.

To this purpose the computer may operate in diagnostic mode and circuit elements which make possible this operating mode are provided.

Thus, in addition to multiplexers 45, 46, which may be controlled, independently from each other, by signals ABIL0 and ABIL01, the computer comprises further a state register 62 which may be selected as an external register by selection signal SX (from decoder 15) and loaded by the falling edge of X1, with the contents of channel 24.

Register 62 has a clock input connected to the output of NAND gate 63 receiving as input signals SX, and X1.

The data inputs of register 62 are connected to channel 24.

Register 62 is reset at the powering on of the system.

One register cell, referenced by INIZ/NORM provides in output signal ABIL1.

A second register cell, referenced by DIAG 1 provides in output a signal which define a first operative mode for diagnostic purpose.

The output of cells INIZ/NORM and DIAG1 are respectively connected to the input of OR gate 64 which outputs signal ABIL0.

It is clear that when the computer is powered on and register 62 is reset both signals ABIL0, ABIL1 are at logic level 0 and the computer is set in the initialization mode.

In other words the computer operate under control of ROM 43 resident microprogram.

Owing to such microprograms the computer provides to load suitable microprograms in RAM 44.

In particular it is possible to load in certain RAM 44 locations, the same microinstructions which re stored in ROM 43 at corresponding locations of equal address or different microinstructions.

At this point register 62 may be loaded so as to set cell DIAG-1, with the effect of raising to 1 signal ABIL0.

From this time on word it is clear that the two computer sections, the one comprised of microprocessor CPC1, the other comprised of microprocessor CPC2 operates under control of microinstructions received from different sources, RAM 44 and ROM 43 respectively, and therefore are put in condition to perform different operations and to produce different input/output information on channels PM1B and PM2B with the consequent and necessary activation of comparators 18 and 34.

This is true even in case the address present on channels ISU1,ISU2 is the same during subsequent cycles.

Furthermore it is clear that the control memory addresses generated by the two microprocessors CPC1 and CPC2 may be conditioned by the execution of the running microinstruction.

Thus, if microinstruction performed by CPC1 controls an unconditional jump, and the microinstruction simultaneously performed by CPC2 does not control an unconditional jump the two microprocessors, even if departing from the same microprogram address may reference at the same time, microinstructions which reside at different addresses.

The contents of ISU1 and ISU2 in phase X0 becomes therefore different, with the consequent and necessary error indication by comparator 42, whose functionality may therefore be tested.

Likewise, if the microinstructions performed by CPC1 and CPC2 are both conditional branches, but the condition which causes the branch is true for one microprocessor only, it is clear that the address updating on channels ISU1, ISU2 occurs in different way.

Therefore the described architecture permits an efficient verification of the comparators functionality, without. requiring the addition/insertion of error injecting circuits (EX OR) in the information flow paths, with the disadvantage in complication, cost, performance degradation which would result.

The handling of the error signals which are generated in normal operation mode or diagnostic mode is beyond the scope of the invention, but it is obvious that the described architecture comprises, as it is provided in conventional architectures, an error handling logic, shown in fig.3 as logic block 65 (ERROR MANAG. LOGIC).

Here, the several error signals such as ERCOCS, ERCKCS, PMC0:3, COCOM and PMBCK0:3, generated at different point of the computer architecture, are stored in an input register 66, at the end of each machine cycles (for instance with the falling edge of signal X1).

Depending on the case and the operative modality, they may provide, in addition to a displayed error indication 67 on an operator panel, a computer HALT command, or a command TRAP for storing the error indication and the contents of certain working registers in suitable memory locations.

In general, it is clear that in test mode error conditions are intentionally generated and the test programs will be organized so that the error conditions, intentionally produced, do not cause a block of the test process but permit its prosecution.

By the more, it may be arranged that in certain conditions it is the missing of an error indication, which indicates the presence of a fault or malfunctioning and causes the halting of the process.

It is worth of note that the logic of Fig. 3 and the use of a state register 62 to define the diagnostic mode by which CPC1, CPC2 are controlled by two different microprograms is a preferred arrangement.

This arrangement permits to exploit the full capacity of RAM 44 as control memory, in normal mode, and in addition the ROM 43 capacity in the initialization mode.

In other words the available control memory size is 68K words, 4K of which are permanently stored and can be used in initialization (and diagnostic mode) and 64 K of which can be used in normal mode.

An alternative embodiment which gives up this advantage may be based on the fact that even if ROM 43 has a capacity of 4 K words, register CSAREG 2 is a 16 bit register for the latching of the 16 bit information present on channel ISU.

The address bits in output from register CSAREG 2 may therefore be used to control a very simple logic which provides to generate signals ABIL 0 and ABIL 1.

The followed concept is that for addresses comprised between 0 and 4 K ROM 43 is anyway selected, for addresses comprised between 4 K and 60 K RAM 44 is anyway selected and for addresses comprised between 60 K and 64 K both RAM 44 and ROM 43 are selected.

This is possible because each of the addresses comprised between 60 K and 64 K coincides with a corresponding address comprised between 0 and 4 K with exception of the four most significant bits ADDR 13 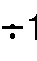 16 which are obviously negletted when addressing ROM 43.

A very simple logic circuit, which is not worth to be shown may perform the boolean function expressed by the following two equations:

$\text{ABIL0 = ADDR13+ADDR14+ADDR15+ADDR16}$ 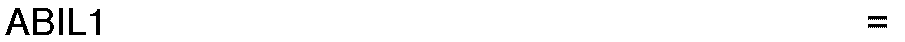
$\text{ABIL1 = ABIL0·} \overline{\text{ADDR13·ADDR14.ADDR15·ADDR16}}$

This arrangement provides for the automatic passage from one operating mode to another operating mode as a function of the addresses but has the disadvantage that the RAM memory locations having addresses comprised between 60 K and 64 K may be used only in diagnostic mode and not in normal mode.

## Claims

1. Fault tolerant computer architecture comprising a functional processing unit (CPC1), programmed by a control store, and having channels for inputing/outputting information, for inputing control instructions stored in said control store, and for outputting addresses for addressing said control store, a duplicate unit of (CPC2) said functional processing unit, a plurality of comparators (18,34,42) for comparing the information in input/output from said functional unit through at least one of said channels with the corresponding information in input/output from said duplicate unit (CPC2), said control store comprising a first read/write memory (44) addressed by said functional unit and a second memory (43) addressed by said duplicate unit,
characterised by first logic means (45,46) for controlling the transfer of control instructions in output from said first memory, selectively to no unit, to said functional unit or jointly to said functional unit and said duplicate unit and for controlling the transfer of control instructions in output from said second memory in mutually exclusive way as to the control instructions in output from said first memory, selectively to no unit, to said duplicate unit or jointly to said functional unit and said duplicate unit, in response to selection signals (ABILφ,ABIL1),
second logic means (62,63,64) for generating said selections signals, said selection signals defining an initialization operative mode, in which said control instructions in output from said second memory are jointly transferred to said functional unit and said duplicate unit, a normal operative mode in which said control instructions in output from said first memory are transferred jointly to said first functional unit and said duplicate unit, and a diagnostic operative mode in which said control instructions in output from said first memory are transferred to said functional unit and said control instructions in output from said second memory are transferred to said duplicate unit.

2. Computer architecture as claimed in claim 1 wherein said first logic means comprises two multiplexers (45,46) having two input paths (A,B) and one output path, the two input paths of both multiplexer being respectively connected to the outputs of said first and second memory (44,43), the output paths of said multiplexers being respectively connected to the control instruction input channel (ISU1,ISU2) of said functional unit (CPC1) and said duplicate unit (CPC2) respectively.

3. Computer architecture as claimed in claim 1, wherein said functional unit (CPC1) and said duplicate unit (CPC2), output on one of said channels (PMB1,PMB2) at subsequent time intervals of a same machine cycle, an address information and a data information, for addressing storage elements (MM1) external to said units and for storing said data information in said storage elements said computer architecture comprising further a first register (20) having inputs connected to said one channel of one of said units, for storing said address information during a machine cycle, and a second register (10), having inputs connected to said one channel of the other one of said units, for storing said data information during a time period having duration equal to the duration of said machine cycle.

4. Computer architecture as claimed in claim 1, comprising a parity generator (26) for generating parity bits related to the information outputted on one of said channels of one of said units, third logic means (27-30) responsive, to a discrepancy signals produced by at least one of said comparators (18,34,42), when the information in output from said functional unit differs from the information in output from said duplicate unit, to change at least one of said parity bits, and fourth logic means (17), for transferring outside said computer architecture an information outputted on one of said channels of one of said units together with said related parity bits, as modified by said third logic means.

## Patentansprüche

1. Fehlertolerante Rechnerarchitektur mit
- einer funktionellen Verarbeitungseinheit (CPC 1), die durch einen Steuerspeicher programmiert ist und Kanäle zur Eingabe/Ausgabe von Information aufweist, zur Eingabe von in dem Steuerspeicher gespeicherten Steueranweisungen und zur Ausgabe von Adressen zum Adressieren des Steuerspeichers,
- einer zu der funktionellen Verarbeitungseinheit duplizierten Einheit (CPC 2),
- einer Mehrzahl von Komparatoren (18, 34, 42) zum Vergleichen der Information in der Eingabe/Ausgabe von der funktionellen Einheit über wenigstens einen der Kanäle mit der entsprechenden Information in der Eingabe/Ausgabe von der duplizierten Einheit (CPC 2),
- wobei der Steuerspeicher einen ersten, durch die funktionelle Einheit adressierten Schreib-Lese-Speicher (44) und einen zweiten, durch die duplizierte Einheit adressierten Speicher (43) umfaßt,
gekennzeichnet durch
- erste Logikmittel (45, 46), um die Übertragung von Steueranweisungen in der Ausgabe vom ersten Speicher selektiv an keine Einheit, an die funktionelle Einheit oder gemeinsam an die funktionelle Einheit und die duplizierte Einheit zu steuern und um die Übertragung von Steueranweisungen in der Ausgabe vom zweiten Speicher in zu den Steueranweisungen in der Ausgabe vom ersten Speicher wechselseitig sich ausschließender Weise selektiv an keine Einheit, an die duplizierte Einheit oder gemeinsam an die funktionelle Einheit und die duplizierte Einheit in Reaktion auf Auswahlsignale (ABIL 0, ABIL 1) zu steuern,
- zweite Logikmittel (62, 63, 64) zum Erzeugen der Auswahlsignale, wobei die Auswahlsignale eine Initialisierungs-Betriebsart, in der die Steueranweisungen in der Ausgabe vom zweiten Speicher gemeinsam an die funktionelle Einheit und die duplizierte Einheit übertragen werden, eine normale Betriebsart, in der die Steueranweisungen in der Ausgabe vom ersten Speicher gemeinsam an die erste funktionelle Einheit und die duplizierte, Einheit übertragen werden, und eine Diagnostik-Betriebsart festlegen, in der die Steueranweisungen in der Ausgabe vom ersten Speicher an die funktionelle Einheit und die Steueranweisungen in der Ausgabe vom zweiten Speicher an die duplizierte Einheit übertragen werden.

2. Rechnerarchitektur nach Anspruch 1, bei der die ersten Logikmittel zwei Multiplexer (45, 46) mit zwei Eingangspfaden (A, B) und einem Ausgangspfad beinhalten, wobei die zwei Eingangspfade beider Multiplexer jeweils mit den Ausgängen des ersten und des zweiten Speichers (44, 43) und die Ausgangspfade der Multiplexer jeweils mit dem Steueranweisungseingangskanal (ISU 1, ISU 2) der funktionellen Einheit (CPC 1) beziehungsweise der duplizierten Einheit (CPC 2) verbunden sind.

3. Rechnerarchitektur nach Anspruch 1, bei der die funktionelle Einheit (CPC 1) und die duplizierte Einheit (CPC 2) auf einem der Kanäle (PM1B, PM2B) in aufeinanderfolgenden Zeitintervallen desselben Betriebszyklus eine Adreßinformation und eine Dateninformation ausgeben, um Speicherelemente (MM 1) außerhalb der Einheiten zu adressieren und die Dateninformation in den Speicherelementen zu speichern, wobei die Rechnerarchitektur des weiteren ein erstes Register (20) mit Eingängen, die mit einem Kanal einer der Einheiten verbunden sind, zum Speichern der Adreßinformation während eines Betriebszyklus und ein zweites Register (10) mit Eingängen, die mit einem Kanal der anderen Einheit verbunden sind, zum Speichern der Dateninformation während einer Zeitspanne mit einer Dauer, die gleich der Dauer des Betriebszyklus ist, beinhaltet.

4. Rechnerarchitektur nach Anspruch 1 mit
- einem Paritätsgenerator (26) zum Erzeugen von Paritätsbits, die sich auf die auf einem der Kanäle einer der Einheiten ausgegebene Information beziehen,
- dritten Logikmitteln (27 - 30), die auf ein Diskrepanzsignal reagieren, das von wenigstens einem der Komparatoren (18, 34, 42) erzeugt wird, wenn sich die Information in der Ausgabe von der funktionellen Einheit von der Information in der Ausgabe von der duplizierten Einheit unterscheidet, um wenigstens eines der Paritätsbits zu ändern, und
- vierten Logikmitteln (17), um eine auf einem der Kanäle einer der Einheiten ausgegebene Information zusammen mit den sich darauf beziehenden Paritätsbits, wie sie durch die dritten Logikmittel modifiziert wurden, nach außerhalb der Rechnerarchitektur zu übertragen.

## Revendications

1. Architecture de calculateur tolérant les fautes comprenant une unité de traitement fonctionnelle (CPC 1), programmée par une mémoire de commande et comportant des voies pour l'information d'entrée/sortie, pour entrer les instructions de commande stockées dans ladite mémoire de commande et pour extraire des adresses pour adressage de ladite mémoire de commande, une unité redondante (CPC 2) de ladite unité de traitement fonctionnelle , une pluralité de comparateurs (18, 34, 42) pour comparer l'information en entrée/sortie issue de ladite unité fonctionnelle à travers au moins une desdites voies avec l'information correspondante en entrée/sortie venant de ladite unité redondante (CPC 2), ladite mémoire de commande comprenant une première mémoire vive (44) adressée par ladite unité fonctionnelle et une seconde mémoire(43) adressée par ladite unité redondante
caractérisée par
un premier moyen logique (45, 46) pour contrôler le transfert des instructions de commande en sortie de ladite première mémoire, sélectivement à aucune unité, à ladite unité fonctionnelle ou conjointement à ladite unité fonctionnelle et à ladite unité redondante et pour contrôler le transfert des instructions de commande en sortie de ladite seconde mémoire de manière mutuellement exclusive quant à l'instruction de commande en sortie de ladite première mémoire, sélectivement à aucune unité, à ladite unité redondante ou conjointement à ladite unité fonctionnelle et à ladite unité redondante en réponse aux signaux de sélection (ABIL 0, ABIL 1)
un second moyen logique (62, 63, 64) pour produire lesdits signaux de sélection, lesdits signaux de sélection définissant un mode opérationnel d'initialisation dans lequel lesdites instructions de commande en sortie de ladite seconde mémoire sont conjointement transférées à ladite unité fonctionnelle et à ladite unité redondante, un mode opérationnel normal dans lequel lesdites instructions de commande en sortie de ladite première mémoire sont transférées conjointement à ladite première unité fonctionnelle et à ladite unité redondante et un mode opérationnel de diagnostic dans lequel lesdites instructions de commande en sortie de ladite première mémoire sont transférées à ladite unité fonctionnelle et lesdites instructions de commande en sortie de ladite seconde mémoire sont transférées à ladite unité redondante.

2. Architecture de calculateur selon la revendication 1 dans laquelle ledit premier moyen logique comprend deux multiplexeurs (45, 46) comportant deux voies d'entrée (A,B) et une voie de sortie, les deux voies d'entrée des deux multiplexeurs étant respectivement connectées aux sorties desdites première et seconde mémoires (44, 43), les voies de sortie desdits multiplexeurs étant respectivement connectées au canal d'entrée de l'instruction de commande (ISU 1, ISU 2) de ladite unité fonctionnelle (CPC 1) et de ladite unité redondante (CPC 2), respectivement.

3. Architecture de calculateur selon la revendication 1 dans laquelle ladite unité fonctionnelle (CPC 1) et ladite unité redondante (CPC 2) sortent sur l'un desdits canaux (PMB1, PMB2) , à des intervalles de temps successifs d'un même cycle machine, une information d'adresse et une information de données, pour adressage des éléments de mémoire (MM1) extérieurs auxdites unités et pour stocker ladite information de données dans lesdits éléments de mémoire,ladite architecture de calculateur comprenant, de plus, un premier registre (20) comportant des entrées connectées audit canal de l'une desdites unités, pour enregistrer ladite information d'adresse pendant un cycle machine et un second registre (10) comportant des entrées connectées audit canal de l'autre desdites unités, pour enregistrer ladite information de données pendant un laps de temps comportant une durée égale à la durée dudit cycle machine.

4. Architecture de calculateur selon la revendication 1, comprenant un générateur de parité (26) pour produire des bits de parité reliés à l'information extraite de l'un desdits canaux de l'une desdites unités, un troisième moyen logique (27-30) sensible à un signal de désaccord produit par au moins l'un desdits comparateurs (18, 34, 42) lorsque l'information en sortie de ladite unité fonctionnelle diffère de l'information en sortie de ladite unité redondante, pour changer au moins un desdits bits de parité et un quatrième moyen logique (17) pour transférer à l'extérieur de ladite architecture de calculateur une information extraite de l'un desdits canaux de l'une desdites unités avec lesdits bits de parité, telle que modifiée par ledit troisième moyen logique.
